Europäisches Patentamt

European Patent Office

Office européen des brevets

(19)

(11) Veröffentlichungsnummer : **0 101 972**
B1

(12) # EUROPÄISCHE PATENTSCHRIFT

(45) Veröffentlichungstag der Patentschrift :
27.05.87

(51) Int. Cl.⁴ : **G 02 C  7/02**

(21) Anmeldenummer : **83107674.0**

(22) Anmeldetag : **04.08.83**

(54) **Brillenlinse für stark Fehlsichtige.**

(30) Priorität : **07.08.82 DE 3229577**

(43) Veröffentlichungstag der Anmeldung :
**07.03.84 Patentblatt 84/10**

(45) Bekanntmachung des Hinweises auf die Patenterteilung : **27.05.87 Patentblatt 87/22**

(84) Benannte Vertragsstaaten :
**AT CH DE FR GB IT LI NL SE**

(56) Entgegenhaltungen :
**EP-A- 0 039 498**
**EP-A- 0 055 878**
**FR-A- 2 509 482**
**US-A- 3 010 366**

(73) Patentinhaber : **Firma Carl Zeiss**
**D-7920 Heidenheim (Brenz) (DE)**
**CH DE FR IT LI NL SE AT**
**CARL-ZEISS-STIFTUNG trading as CARL ZEISS**

**D-7920 Heidenheim (Brenz) (DE)**
**GB**

(72) Erfinder : **Fürter, Gerhard, Dipl.-Mathmatiker**
**Hegelstrasse 124**
**D-7080 Aalen (DE)**
Erfinder : **Lahres, Hans**
**Am Sattel 5**
**D-7080 Aalen-Wasseralfingen (DE)**

**0 101 972**

## Beschreibung

Die vorliegende Erfindung betrifft eine Brillenlinse mit positiver dioptrischer Wirkung für stark Fehlsichtige. Unter starker Fehlsichtigkeit ist dabei der Bereich ab etwa + 6 dpt verstanden.

Brillenlinsen im genannten Bereich weisen bei sphärischer Ausbildung beider Linsenflächen schwerwiegende Nachteile auf, die vor allem darin liegen, daß hohe Mittendicken auftreten. Abgesehen vom hohen Gewicht der Brillenlinsen führt dies auch zu optischen Fehlern. Bei Pluslinsen können im Randbereich bestimmte Objektbereiche überhaupt nicht gesehen werden. Dazu kommen schon bei kleinen Blickwinkeln große Abbildungsfehler, insbesondere Astigmatismus und Einstellfehler.

Ausgehend von der Erkenntnis, daß es bei herkömmlichen Brillenlinsen mit starker dioptrischer Wirkung wegen der auftretenden Abbildungsfehler ohnehin nicht möglich ist den gesamten Linsenbereich zum Sehen zu verwenden, ist es bekannt die störenden Linsendicken dadurch zu reduzieren, daß man den optisch nutzbaren Durchmesser verkleinert und die Linse mit einem Tragrand versieht. Dieser liefert dann den Gesamtdurchmesser der Linse und wird in die Brillenfassung eingeschliffen. Bei dieser Ausführung treten die erwähnten optischen Unstetigkeiten schon bei kleineren Blickwinkeln auf und die Brillenlinse vermag ästhetisch nicht zu befriedigen. Dasselbe gilt auch für die sogenannten Lentikularlinsen, bei denen die Dicke außerhalb des optisch nutzbaren Durchmessers nicht in Form einer Stufe sondern nach einem Flächenknick kontinuierlich zum Linsenrand hin abfällt.

Es hat nicht an Versuchen gefehlt Brillenlinsen für stark Fehlsichtige für den Benutzer komfortabler und ästhetisch befriedigender zu gestalten.

So ist es aus der DE-A-29 41 733 bekannt Brillenlinsen im Plusbereich mit einer konvexen rotationssymmetrischen asphärischen Vorderfläche und einer konkaven sphärischen bzw. torischen augenseitigen Fläche auszubilden. Man erhält damit eine Linse, bei der die Vorderfläche außerhalb des gut korrigierten optisch nutzbaren Durchmessers stetig in den Tragrand übergeht. Bei solchen Linsen ist die Vorderfläche im Mittelteil stark konvex gekrümmt und biegt zum Rand hin in einen konkaven Bereich um. Da sich die Linse damit auch weit aus der Fassung vorwölbt, werden solche Brillenlinsen als ästhetisch nicht befriedigend empfunden.

Aus der EP-A-55 878 ist eine Brillenlinse im Minusbereich bekannt, bei der auf der augenseitigen Fläche einer üblichen, mit sphärischen Flächen ausgebildeten meniskusförmigen Minuslinse ein Lentikularausschliff vorgenommen ist, dessen Durchmesser je nach Korrektion 20-28 mm beträgt und der sphärisch ist. Der Rand des Lentikularausschliffes geht stetig in den Außenbereich der Trägerlinse über.

Es ist nun die Aufgabe der vorliegenden Erfindung eine Brillenlinse mit positiver dioptrischer Wirkung für stark Fehlsichtige zu schaffen, deren Aussehen bei annehmbarer Dicke der Linse ästhetisch voll befriedigt, bei der die Bildfehler in einem genügend großen Bereich optimal korrigiert sind, bei der keine störenden Unstetigkeiten der Sehfelder auftreten und bei der die Gesamtvergrößerung möglichst nahe bei 1 liegt.

Diese Aufgabe wird durch eine gemäß dem kennzeichnenden Teil des Anspruchs 1 ausgebildete Brillenlinse gelöst.

Bei der Brillenlinse nach der Erfindung ist die objektseitige Vorderfläche konvex sphärisch ausgebildet. Sie bietet damit dem Betrachter die Ansicht, die er von üblichen Brillenlinsen her gewohnt ist. Da zugleich die asphärisch ausgebildete augenseitige Linsenfläche keine Unstetigkeiten und Knicke aufweist, ist die Brillenlinse ästhetisch voll befriedigend.

Die ästhetisch befriedigende Ausbildung der Brillenlinse bedingt, daß zumindest bei höheren astigmatischen Wirkungen der wesentliche Anteil dieses Augenfehlers durch einen Torus auf der augenseitigen Fläche der Linse behoben wird. Zur Korrektion der auftretenden Bildfehler, wie Astigmatismus und Einstellfehler muß diese Fläche atorisch ausgebildet werden, wie es beispielsweise in der EP-A-39 498 beschrieben ist. Ein solcher Atorus erfordert einen höheren Fertigungsaufwand als eine rotationssymmetrische Asphäre ; er ermöglicht aber auch eine optimale Korrektur der Bildfehler.

Bei der neuen Brillenlinse ist also ganz bewußt ein höherer Fertigungsaufwand in Kauf genommen um die Brillenlinse ästhetisch voll befriedigend zu gestalten und um in jedem Falle eine optimale Korrektur der Bildfehler zu erhalten. Diese Korrektur kann unabhängig von der Korrektionswirkung Brillenlinse stets innerhalb des Hauptblickfeldes erreicht werden.

Bei der Brillenlinse nach der Erfindung dient nur eine Fläche, nämlich die asphärisch oder atorisch ausgebildete Rückfläche, zur optimalen Korrektur der Bildfehler, wobei die ästhetisch befriedigende Wirkung der Brillenlinse in jedem Falle erhalten bleibt.

Bei der Brillenlinse nach der Erfindung wird bei der asphärischen Ausbildung der Rückfläche die Korrektur mit dem Ziel geführt, den Astigmatismus sowie den Einstellfehler möglichst klein zu halten. Bei den herkömmlichen Asphären bedeutet dies, daß der Tangentialfehler zu Null gemacht wird.

Das Hauptblickfeld umfaßt den Blickwinkel bis zu einem Wert von etwa 20°, das heißt der optisch nutzbare Durchmesser wird so gewählt, daß ein objektseitiger Blickwinkel von ca. 20° gewährleistet ist.

Von diesem Durchmesser aus geht die augenseitige Fläche zweimal stetig differenzierbar in einen Bereich über in dem ihre meridionale Steigung sich der Steigung der konvexen Vorderfläche annähert. Annähern bedeutet in diesem Zusammenhang, daß der Unterschied der Steigungen nicht größer ist als

2

bei sphärisch ausgebildeten Linsen schwacher Wirkung. Durch diese Maßnahme wird die prismatische Wirkung sehr klein gehalten und der Gesichtsfeldausfall, bzw. der sogenannte Bildsprung stark reduziert oder sogar zu Null gemacht.

Wird die Fehlsichtigkeit eines Auges mittels einer Brillenlinse korrigiert, so hat das System Brillenlinse/Auge eine gewisse Gesamtvergrößerung, die bewirkt, daß der Brillenträger insbes. mit Brillenlinsen höherer dioptrischer Wirkung Gegenstände im Sehfeld nicht in ihrer natürlichen Größe wahrnimmt. Diese Gesamtvergrößerung V errechnet sich nach folgender Formel :

$$V = \frac{1}{1 - e * S'} \times \frac{1}{1 - \frac{d}{n} \cdot D_1} \qquad (1)$$

Dabei bedeuten :

$e*$ = Abstand des Brillenlinsenscheitels vom vorderen Hauptpunkt des Auges
$S'$ = dioptrische Wirkung der Brillenlinse, in dpt
$d$ = Mittendicke der Brillenlinse
$n$ = Brechungsindex des Brillenlinsen-Materials
$D_1 = (n-1)/r_1$
$r_1$ = Radius der objektseitigen Fläche der Brillenlinse

Der erste Faktor dieser Gleichung wird als Systemvergrößerung, der zweite als Eigenvergrößerung bezeichnet.

Mit Hilfe der Brillenlinse nach der Erfindung gelingt es auch stark fehlsichtige Augen zu korrigieren und zugleich den Nachteil der veränderten Größenwahrnehmung gegenüber bisher bekannten Brillenlinsen zu reduzieren. Die Erfindung ermöglicht es die Mittendicke d zu reduzieren und die Durchbiegung $D_1$ der Frontfläche klein zu halten. Damit wird es auch möglich die Gesamtvergrößerung V näher bei 1 zu halten als bei bekannten Brillenlinsen.

Bei höheren dioptrischen Wirkungen ist es vorteilhaft zur optimalen Reduktion der Dicke und damit der Gesamtvergrößerung V der augenseitigen asphärischen Rückfläche in ihrem korrigierten Bereich eine konvexe Gestalt zu geben. Der Meridianschnitt einer solchen Linse hat dann augenseitig die Form eines doppelten flachen S. Wenn mann den optisch nutzbaren Durchmesser etwas weiter reduziert, beispielsweise auf einen Wert von 35 mm, so erhält man eine Brillenlinse, die sehr viel dünner und deshalb auch leichter ist als bekannte vergleichbare Brillenlinsen.

Die Erfindung wird im folgenden anhand der Fig. 1-5 der beigefügten Zeichnungen näher erläutert. Im einzelnen zeigen :

Figur 1a   eine Brillenlinse mit der dioptrischen Wirkung + 18 dpt in der Ausbildung als Tragrandlinse ;

Figur 1b   eine Brillenlinse derselben dioptrischen Wirkung in der Ausbildung nach DE-A-29 41 733 ;

Figur 2   ein Ausführungsbeispiel einer nach der Erfindung ausgebildeten Brillenlinse mit + 18 dpt ;

Figur 3   ein anderes Ausführungsbeispiel einer nach der Erfindung ausgebildeten Brillenlinse mit + 18 dpt ;

Figur 4   eine Brillenlinse mit der dioptrischen Wirkung + 6 dpt in der Ausbildung nach DE-A-29 41 733 ;

Figur 5   ein Ausführungsbeispiel einer nach der Erfindung ausgebildeten Brillenlinse mit + 6 dpt, die aus dem gleichen Material ist wie die Brillenlinse der Fig. 6.

Bei der in Fig. 1a dargestellten bekannten Brillenlinse 10 ist außerhalb des optisch-nutzbaren Durchmessers 6 ein verhältnismäßig dünner Tragrand 11 vorgesehen. Die Flächen 3 und 4 sind sphärisch ausgebildet. Es ist ohne weiteres einzusehen, daß eine solche Brillenlinse ästhetischen und optischen Anforderungen nicht genügt.

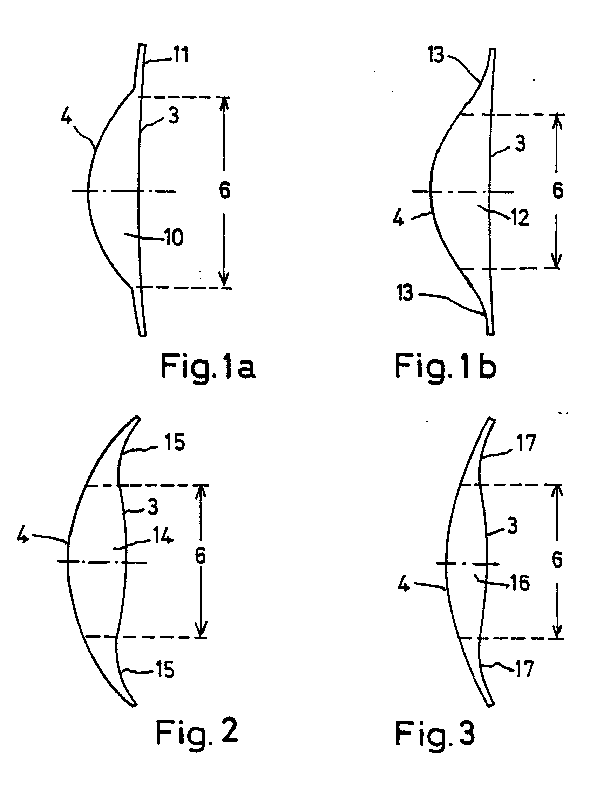

Bei der in Fig. 1b dargestellten Brillenlinse 12 ist die Rückfläche 3 sphärisch ausgebildet, während die Vorderfläche 4 die Gestalt einer Asphäre hat. Außerhalb des optisch nutzbaren Durchmessers 6 geht die Vorderfläche stetig in den Rand 13 über, wobei die Krümmung der Fläche 4 wechselt ; die im Mittelbereich stark konvex gekrümmte Fläche 4 verläuft in ihrem äußeren Bereich konkav gekrümmt. Dies ist der Grund, weshalb auch eine solche Linse ästhetisch nicht befriedigt.

Die in Fig. 2 dargestellte, gemäß der Erfindung ausgebildete Brillenlinse 14 hat dieselbe dioptrische Wirkung und ist aus dem gleichen Material (Allyldiglycolcarbonat CR 39) hergestellt wie die bekannte Brillenlinse der Fig. 3b. Beide Linsenflächen 3 und 4 haben im Bereich des optisch-nutzbaren Durchmessers 6 eine konvexe Gestalt, d. h. die Linse ist biförmig. Die Vorderfläche 4 ist konvex sphärisch, die Rückfläche 3 ist asphärisch mit konvexem Verlauf im Bereich des Durchmessers 6 und konkavem Verlauf im Bereich 15. In diesem Bereich nähert sich die meridionale Steigung der Rückfläche 3 der Steigung der sphärischen Vorderfläche 4, wobei dieser Übergang stetig ist. Die Rückfläche 3 ist zweimal stetig differenzierbar. Ihr Meridianschnitt hat die Form eines doppelten flachen S.

Wie ein Vergleich der Fig. 1a, 1b mit Fig. 2 zeigt ist bei der Biform die Frontfläche 4 wesentlicher flacher gestaltet als bei den anderen Brillenlinsen. Eine solche flache Frontfläche bringt den Vorteil mit sich, daß die Vorwölbung gegen die Brillenfassung gering ist, so daß eine solche Brille für einen Betrachter einen angenehmen Anblick bietet.

Außerdem kann bei der Brillenlinse der Fig. 2 die Mittendicke geringer gehalten werden kann, als bei bekannten Formen, so daß die Linse leichter wird. Gegenüber der Brillenlinse der Fig. 1b ergibt sich eine Gewichtseinsparung von ca. 10 %.

Die verringerte Mittendicke und die flachere Ausbildung der Frontfläche bringt entsprechend der Formel (1) den Vorteil, daß bei der Biform der Fig. 2 die Eigenvergrößerung und damit die Gesamtvergrößerung V gegenüber bekannten Formen deutlich reduziert ist. Dies bringt dem Benutzer einen ganz wesentlichen Vorteil, der sich zudem auch in ästhetischer Hinsicht bemerkbar macht.

Eine weitere deutliche Reduzierung der Mittendicke und der Frontlinsendurchbiegung ergibt sich bei einer Ausbildung der Brillenlinse aus Silikatglas, beispielsweise aus dem von der Firma SCHOTT unter der Bezeichnung BaSF 64 vertriebenen Glas. Eine aus diesem Glas hergestellte Brillenlinse 16 zeigt Fig. 3. Auch hier hat die Rückfläche 3 in ihrem zentralen Teil 6 eine konvexe Gestalt, die im Bereich 17 in einen konkaven Verlauf übergeht.

In der nachfolgenden Tabelle sind für Linsen einer dioptrischer Wirkung von + 18 dpt einige Daten der nach der Erfindung ausgebildeten biförmigen Brillenlinse den Daten einer bekannten Brillenlinse nach Fig. 1b gegenübergestellt.

| | Bekannte Linse (Fig. 1b) | Biform (Fig. 2) | Biform (Fig. 3) |
|---|---|---|---|
| Material | CR 39 $n=1.501$ | CR 39 $n=1.501$ | Silikatglas $n=1.706$ |
| Außendurchmesser | 67 | 66 | 66 |
| Mittendicke d | 13.6 | 12.3 | 8.6 |
| Radius der Vorderfläche $r_1$ | 29.70 | 43.74 | 61.39 |
| Radius der Rückfläche $r_2$ | 268.27 | -94.81 | -121.89 |
| Eigenvergrößerung | 1.18 | 1.10 | 1.06 |
| Systemvergrößerung | 1.35 | 1.35 | 1.35 |
| Gesamtvergrößerung V | 1.60 | 1.49 | 1.43 |

Alle Maße sind in mm angegeben. Die Radien $r_1$ und $r_2$ sind bei asphärischer Ausbildung der betreffenden Fläche jeweils die Krümmungsradien in der Linsenmitte.

Eine Brillenlinse-Serie muß einen sehr großen Bereich dioptrischer Wirkungen umfassen, der auch das einleitend definierte Gebiet der starken Fehlsichtigkeit einschließt.

Für dioptrische Wirkungen, die außerhalb des Gebietes der starken Fehlsichtigkeit liegen, werden Brillenlinsen üblicherweise meniskenförmig ausgebildet, d. h. mit konvexer Vorderfläche und konkaver Rückfläche.

Würden die Pluslinsen im gesamten Gebiet starker Fehlsichtigkeit als Biformen entsprechend den Fig. 2 und 3 ausgebildet, so könnte der Fall eintreten, daß ein Patient, dessen Augen verschieden hyperop sind zur Korrektur seiner Fehlsichtigkeit eine Brille hätte, deren eine Linse meniskusförmig ist, während die andere eine Biform aufweist. Eine solche Brille würde ästhetisch nicht befriedigen, da die Biform vorderseitig weniger stark gekrümmt ist als die meniskusförmige Linse.

Aus diesem Grunde ist es vorteilhaft im Anfangsbereich des Gebietes starker Fehlsichtigkeit auch meniskusförmige Brillenlinsen vorzusehen. Diese Linsen sind gemäß der Erfindung ausgebildet, d. h. ihre Rückfläche ist asphärisch. Mit Hilfe von asphärischen bzw. atorischen Flächen gelingt die Korrektur der Bildfehler bei jeder Durchbiegung der Fläche, so daß sowohl eine meniskusförmige als auch eine biförmige Gestalt der Brillenlinse möglich ist, ohne daß sich diese Formen hinsichtlich der Korrektur der Bildfehler unterscheiden.

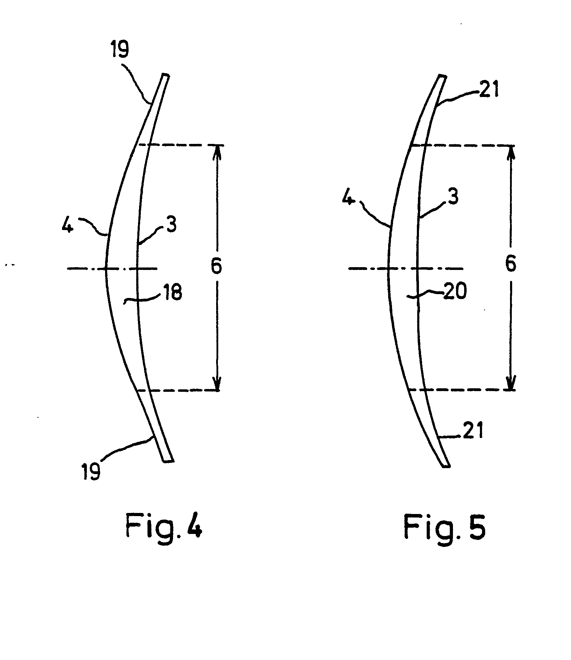

Ein Ausführungsbeispiel einer gemäß der Erfindung ausgebildeten meniskusförmigen Brillenlinse mit der dioptrischen Wirkung von + 6 dpt ist in Fig. 5 dargestellt.

Eine Brillenlinse derselben dioptrischen Wirkung in der Ausbildung nach DE-A-29 41 733 zeigt Fig. 4. Diese Linse 18 weist eine Vorderfläche 4 auf, die in ihrem mittleren Bereich stärker durchgebogen ist als die Vorderfläche der Linse 20 in Fig. 5. Außerdem wechselt die Krümmung der bekannten Linse 18 beim Übergang vom mittleren Bereich 6 in den äußeren Bereich 19. Bei der Linse 20 in Fig. 5 ist die Rückfläche 3 im Bereich des Randes 21 stärker gekrümmt als im Mittelbereich 6 ; hier nähert sich die Steigung der Rückfläche 3 der Steigung der Vorderfläche 4 an.

Da bei der Linse nach Fig. 5 die Vorderfläche 4 flacher und damit der Wert $D_1$ kleiner ist, ist die Gesamtvergrößerung V kleiner als bei der bekannten Linse nach Fig. 4.

Wie eine Betrachtung der Fig. 2, 3 und 5 zeigt ist bei allen Brillenlinsen in der erfindungsgemäßen Ausbildung die Krümmung der Rückfläche 3 außerhalb des optische nutzbaren Mittelbereichs 6 relativ stark. Dies reduziert den sogenannten « Rückspiegeleffekt », d. h. die den Brillenträger störende Sichtbarkeit der sich an der Rückfläche spiegelnden Objekte starker Helligkeit. Solche störenden Spiegeleffekte treten dagegen, wie Figur 1 zeigt bei den bekannten Brillenlinsen auf.

Auch diese Eigenschaft der neuen Brillenlinsen erhöht also ihren Tragekomfort.

## Patentansprüche

1. Brillenlinse mit positiver dioptrischer Wirkung für stark Fehlsichtige, bei der die objektseitige Vorderfläche (4) konvex sphärisch ausgebildet ist, dadurch gekennzeichnet, daß die augenseitige Fläche (3) in ihrem mittleren Bereich (6) bis zu einem Blickwinkel von mindestens 20° asphärisch korrigiert ist und von dort in einen Bereich übergeht, in dem ihre meridionale Steigung sich der Steigung der konvexen Vorderfläche (4) annähert, wobei die gesamte augenseitige Fläche zweimal stetig differenzierbar ist.

2. Brillenlinse nach Anspruch 1, dadurch gekennzeichnet, daß die augenseitige Innenfläche (3) in ihrem korrigierten Bereich (6) eine konvexe Gestalt hat.

3. Brillenlinse nach Anspruch 2, dadurch gekennzeichnet, daß ihr Meridianschnitt augenseitig die Form eines doppelten flachen S hat.

4. Brillenlinse nach Anspruch 1-3, dadurch gekennzeichnet, daß der asphärisch korrigierte Teil der Innenfläche (3) als rotationssymmetrische Asphäre ausgebildet ist.

5. Brillenlinse nach Anspruch 1-3, dadurch gekennzeichnet, daß der asphärisch korrigierte Teil der Innenfläche (3) als Atorus ausgebildet ist.

## Claims

1. Spectacle lens having positive dioptric power, for persons suffering from severe ametropia, the front surface (4) of this lens being convexly spherical, characterized in that the eye-side rear surface (3) is aspherically corrected in its central region up to a viewing angle of at least 20° and passes from there into a region in which its meridional inclination approaches the inclination of the convex front surface (4), whole the eye-side surface of the lens being continuously differentiable twice.

2. Spectacle lens according to claim 1, characterized in that the eye-side rear surface (3) has a convex shape within its corrected central region (6).

3. Spectacle lens according to claim 2, characterized in that its median section on its rear side has the shape of a double flat S.

4. Spectacle lens according to claims 1 to 3, characterized in that the aspherically corrected region of the eye-side rear surface (3) is developed as an asphere of rotational symmetry.

5. Spectacle lens according to claims 1 to 3, characterized in that the aspherically corrected region of the eye-side rear surface (3) is developed as an atorus.

## Revendications

1. Verre de lunettes de puissance dioptrique positive, pour malvoyants à forte déficience visuelle, dont la face avant (4) ou face côté objet possède une forme sphérique convexe, caractérisé en ce que la face (3) tournée vers l'œil est pourvue d'une correction asphérique dans sa zone centrale (6), jusqu'à un angle de vision d'au moins 20°, et se raccorde de là à une zone dans laquelle sa pente méridienne s'approche de la pente de la face avant (4) convexe, toute la face tournée vers l'œil étant deux fois différenciable de façon continue.

2. Verre selon la revendication 1, caractérisé en ce que la face intérieure (3) ou face tournée vers l'œil possède une forme convexe dans sa zone corrigée (6).

3. Verre selon la revendication 2, caractérisé en ce que sa section méridienne présente la forme d'un double S aplati du côté de l'œil.

4. Verre selon les revendications 1-3, caractérisé en ce que la partie à correction asphérique de la face intérieure (3) est réalisée comme une surface asphérique à symétrie de révolution.

5. Verre selon les revendications 1-3, caractérisé en ce que la partie à correction asphérique de la face intérieure (3) est réalisée comme une surface non torique.

Fig.1a

Fig.1b

Fig. 2

Fig. 3

Fig. 4

Fig. 5